# EUROPEAN PATENT SPECIFICATION

(11) **EP 4 446 980 B1**
(45) Date of publication and mention of the grant of the patent: **24.12.2025**
(21) Application number: 23208117.4
(22) Date of filing: 07.11.2023
(51) Int. Cl.: G06T 7/00

(54) **METHOD FOR FINDING BLACK SPOTS IN SEPARATOR**
VERFAHREN ZUM AUFFINDEN VON SCHWARZEN FLECKEN IN EINEM SEPARATOR
PROCÉDÉ DE RECHERCHE DE TACHES NOIRES DANS UN SÉPARATEUR

(30) Priority: 10.04.2023 KR 20230047091
(43) Date of publication of application: 16.10.2024
(73) Proprietor: Samsung SDI Co., Ltd., Yongin-si, Gyeonggi-do 17084 (KR)
(72) Inventor: Yu, Jungyi, Yongin-si, Gyeonggi-do 17084 (KR); Lyu, Seungwoo, Yongin-si, Gyeonggi-do 17084 (KR); Hwa, Changyeon, Yongin-si, Gyeonggi-do 17084 (KR); An, Leehwan, Yongin-si, Gyeonggi-do 17084 (KR)
(74) Representative: Gulde & Partner

(56) References cited:
- EP-A1- 4 254 262
- WO-A1-2022/114665
- HUBER JOSEF ET AL: "Non-destructive Quality Testing of Battery Separators", vol. 62, 2017, NL, pages 423 - 428, XP093113222, ISSN: 2212-8271, Retrieved from the Internet <URL:https://www.ndt.net/article/ndt-review/papers/1-s2.0-S2212827116306205-main.pdf> [retrieved on 20231218], DOI: 10.1016/j.procir.2016.06.002
- DU BARET DE LIM� ARNAUD ET AL: "Impact of Electrode Defects on Battery Cell Performance: A Review", vol. 5, no. 10, 7 September 2022 (2022-09-07), XP093113221, ISSN: 2566-6223, Retrieved from the Internet <URL:https://onlinelibrary.wiley.com/doi/full-xml/10.1002/batt.202200239> [retrieved on 20231218], DOI: 10.1002/batt.202200239

## Description

### BACKGROUND

### (a) Technical Field

The present invention relates to a method for finding black spots in a separator. More particularly, the present disclosure relates to a method for finding black spots of a separator that finds black spots that cause fine short circuits as dV defects.

### (b) Description of the Related Art

As it is known, for a stable cell operation of the rechargeable battery, cells with fine short circuits between positive electrode and negative electrode are selected and managed in advance. The cells selected in this way are generally referred to as voltage change (DV, difference) defects, that is, "dV defects".

The dV defects are mainly caused by the short-circuits made by an oxidation of metal foreign materials inside the positive electrode and a reduction precipitation to the negative electrode and the separator. Conventionally, these short-circuits are called "black spots" because they appear to naked eyes as black dots. Therefore, in order to solve the dV defects, it is necessary to find these black spots and figure out which the metal foreign materials acted as a cause system.

The basic method for finding these black spots is to use a human eye. Because the short circuit appears as a black spot on the negative electrode and the separator, a person may observe the negative electrode and the separator with the naked eye and find the black spot.

However, because a visual inspection with the naked eye has a large dispersion among inspectors and may miss small black spots of hundreds of micrometers, even when several cells are dismantled and analyzed, the ratio for finding the black spots is very low.

WO2022114665A1 relates to a method and apparatus for classifying solar battery cell images using electroluminescence imaging, wherein images are first classified based on the extent of black spot coverage, and if above a threshold, further classified by defect type using a pre-trained model.

### SUMMARY

The present invention is set out in the appended set of claims. An object of the present invention is to provide a method for finding black spots of a separator that automatically selects black spots by using an equipment. In addition, another object of the present invention is to provide a method for finding black spots of a separator that dramatically improves a discovery ratio of black spots and eliminates a dispersion according to an analyst.

According to the present invention, a method of (or for) finding black spots in a separator includes taking out a separator from a rechargeable battery cell; removing a foreign material of (or from) the separator surface; obtaining a first image for a portion (e.g. a portion of the separator surface) where black spots are estimated (or expected) in the separator (or which is to be checked for black spots) by using a first camera and recording a position of the first image; first selecting the part (or portion) where black spots are estimated (or expected or which is to be checked for black spots) by using the first image, and acquiring a second image for black spots and a foreign material other than black spots in the separator by using a second camera for the recorded position; and secondary selecting black spots by deep learning the first image and the second image with a deep learning software and then outputting, (e.g. displaying) the position of the black spots.

**In** the taking out, a case (e.g. a prismatic case) of the rechargeable battery cell may be disassembled to take out a plurality of electrode assemblies and the amount of a voltage drop may be checked to select one electrode assembly out of the plurality of electrode assemblies, the selected electrode assembly may be unfolded, and one surface of one separator among the unfolded positive electrode, negative electrode, and two separators may be attached to a core of a winding machine and then wound to prepare a sample of the separator. Preselecting electrode assemblies based on the voltage drop increases the chances to find separators with black holes.

**In** the removing of the foreign material, because a first adhesion roller and a first removal roller are sequentially contacted (with) and rotated on the first surface of the separator, the foreign material on the first surface may be removed using the viscosity difference between the first adhesion roller and the first removal roller, and because a second adhesion roller and a second removal roller are sequentially contacted (with) and rotated on the second surface of the separator, the foreign material on the second surface may be removed using the viscosity difference between the second adhesion roller and the second removal roller. **In** other words, the adhesion rollers may be directly contacted with the surfaces of the separator and the removal rollers may be indirectly contacted with the surfaces of the separator via the adhesion rollers.

Despite the viscosity difference between the first adhesion roller and the first removal roller, and the viscosity difference between the second adhesion roller and the second removal roller, the black spots formed by a metal oxide penetrating the inside of the separator may remain. **In** other words, the adhesion rollers and the removal rollers are configured to merely remove foreign materials not being made of metal oxide and which are arranged superficially with respect to the separator surface. This allows to reduce the amount of foreign material, while keeping presence of the black spots made of metal oxide in the separator.

In the obtaining of the first image, a line camera may be used as the first camera and the first image may be measured from the separator on a roll-to-roll drive unit.

In the acquiring of the second image, the second image may be measured from the separator on a stage drive unit following the roll-to-roll drive unit by using an area camera as the second camera.

In the obtaining of the first image, the first camera may be fixed to measure the first image from the separator in the stopped state of the roll-to-roll drive unit, and in the acquiring of the second image, the secondary image may be measured from the moving separator while moving the second camera along with the raised stage driving unit. By measuring the moving separator with a moving second camera, the separator does not need to be stopped for obtaining the second image so that the inspection speed of the method is increased.

In the recording of the position of the first image, a standard marking code may be marked with an equal interval on the separator to recognize a coordinate during the movement of the separator and the position of the first image may be recorded. The determination of the position of the first image is easy and fast when using standard marking codes, thereby improving an inspection speed.

In the recording of the position of the first image, the distance according to the movement time of the separator may be calculated to set a Y coordinate, and an X coordinate may be set in the width of the separator within the measurement area of the first camera to record the position of the first image.

In the first selecting, black spots and foreign materials other than black spots may be first selected by using a data that can be obtained from the first image, and in the second selecting of the black spots, black spots and foreign materials other than the black spots may be secondary selected by deep learning the first image and the secondary image.

In the first selecting, the first image including all data obtained from a transmission mode and a reflection mode of the first camera may be compared. Transmission and reflection modes provide images with additional information, thereby providing better results.

In the first selecting, the part with a difference between a base and a peak may be detected as the part where black spots are estimated by using a gray level of pixels from the first image. The use of using gray level of pixels for finding black spots is fast and efficient, thereby improving an inspection speed.

In the first selecting, a no good area that differs from the black spots may be first excluded as an OR condition for each data among the data, at this time, a good area that is not excluded may include a first area that may distinguish black spots and foreign materials other than black spots, and a second area that is the same as black spots. This reduces the amount of data which needs to be processed, thereby improving an inspection speed.

In the first selecting and the acquiring of the second image, an over-detection rate may be reduced by excluding a no good area by using a no good area ratio among the data.

In the first selecting and the acquiring of the second image, a no good area may be excluded using a peak difference of a gray level among the data.

In the first selecting and the acquiring of the second image, a no good area may be excluded among the data by using a peak average of a gray level.

In the first selecting and the acquiring of the second image, a no good area may be excluded among the data by using a difference of a gray level.

In the first selecting and the acquiring of the second image, a no good area may be excluded among the data by using a difference (an avg gray diff) of an average gray level.

In the first selecting and the acquiring of the second image, a no good area may be excluded among the data by using a difference (a min gray diff) of a minimum gray level.

The method of finding black spots in the separator according to an exemplary embodiment may further include automatically analyzing the components of the black spots by using an equipment, the black spots may be specified twice in the first selection and the second selection, in the automatically analyzing, the components of the black spots may be analyzed with X-rays using X-ray fluorescence analysis (XRF) equipment.

In the method of finding black spots in the separator according to an exemplary embodiment, the first image is used for the first selection, the secondary image is obtained for the position where the first image was recorded, the deep learning is performed for select the first image and the second image for the second selection of black spots, and then the positions of black spots are displayed, thereby reducing a dispersion of the found black spots among analysts, increasing the ratio of finding the black spots, and improving an inspection speed. In addition, an exemplary embodiment may further analyze components of the black spots through the automatic analysis.

### BRIEF DESCRIPTION OF THE DRAWINGS

FIG. 1 is a flowchart of a method for finding black spots of a separator according to an embodiment.
FIG. 2 is a schematic diagram of a system for finding black spots of a separator according to an embodiment.
FIG. 3 is a schematic diagram of a foreign material removal unit in FIG. 2.
FIG. 4 is a schematic diagram of a first image measuring unit and a second image measuring unit in FIG. 2.
FIG. 5 is a view showing an optical image of actual black spots in a separator.
FIG. 6 is a view showing a first image obtained by acquiring all data obtained in a transmission mode for a separator.
FIG. 7 is a view showing a first image obtained by acquiring all data obtained from a reflection mode for a separator.
FIG. 8 is a view showing a plane image and a cross-section image of a separator showing a method of classifying black spots and foreign materials into gray values as a first image in a separator.
FIG. 9 is a view showing an image that primarily excludes foreign materials other than black spots by utilizing an inappropriate area ratio among a data obtained from a first image acquired from a first camera.
FIG. 10 is a view showing an image that primarily excludes foreign materials other than black spots by utilizing a peak change among a data obtained from a first image acquired from a first camera.
FIG. 11 is a view showing an image that primarily excludes foreign materials other than black spots by using a peak average among data obtained from the first image obtained from the first camera.
FIG. 12 is a view showing an image that primarily excludes foreign materials other than black spots by utilizing a gray value change among a data obtained from a first image acquired from a first camera.
FIG. 13 is a view showing an image that primarily excludes foreign materials other than black spots by utilizing an average gray value level among a data obtained from a first image acquired from a first camera.
FIG. 14 is a view showing an image that primarily excludes foreign materials other than black spots by utilizing a minimum gray value level among a data obtained from a first image acquired from a first camera.
FIG. 15 and FIG. 16 are views showing an image in which black spots are detected as a no good **NG** by deep learning a first image and a second image and secondary selecting black spots.
FIG. 17 is a view showing an image that detects foreign materials other than black spots as a good OK by secondary selecting materials other than black spots by deep learning a first image and a second image.
FIG. 18 is a cross-sectional view showing black spots detected in a separator and foreign materials other than black spots excluded from a first selection.

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

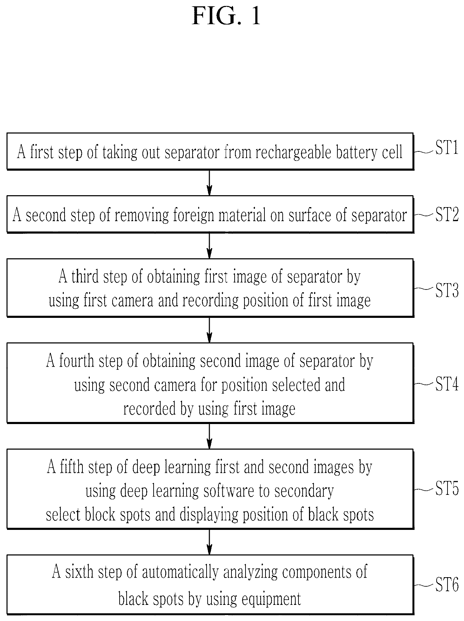

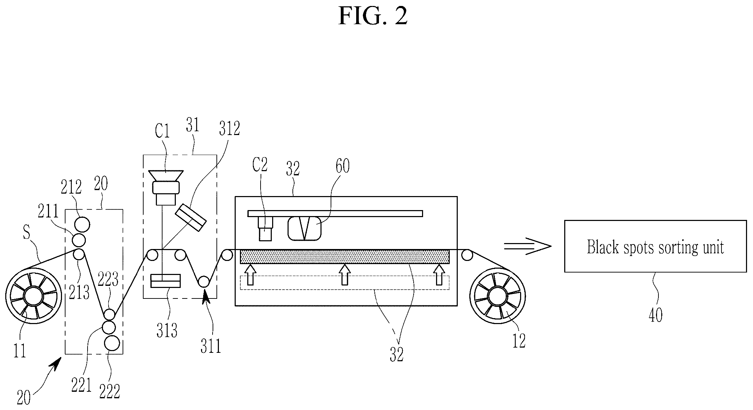

FIG. 1 is a flowchart of a method for finding black spots of a separator according to an embodiment. FIG. 2 is a schematic diagram of a system for finding black spots of a separator according to an embodiment. The method for finding the black spots of the separator and the system used for this method to find the black spots of the separator are explained together with reference to FIG. 1 and FIG. 2.

Referring to FIG. 1 and FIG. 2, the method for finding the black spots of the separator S includes a first step ST1, a second step ST2, a third step ST3, a fourth step ST4, and a fifth step ST5. The system for finding the block of the separator of an embodiment includes a winding machine 11, a rewinder 12, a foreign material removal unit 20, a first image measuring unit 31, a second image measuring unit 32, and a black spots sorting unit 40.

In the first step ST1, the separator is taken out from a rechargeable battery cell, e.g. by using the winding machine 11. The winding machine 11 is configured to manufacture a sample of the separator S by taking out and winding the separator from the rechargeable battery cell. The winding machine 11 acts as an unwinder to supply the separator S manufactured as a sample from the system, and the rewinder 12 is configured to rewind the separator S passing through the second image measuring unit 32 to be recovered from the system.

Preferably, in the first step ST1, after disassembling a case (e.g. a prismatic case) of the rechargeable battery cell (e.g. a prismatic battery cell) and taking out the plurality of electrode assemblies, the amount of a voltage drop is checked to select one electrode assembly out of multiple, i.e. out of the plurality of electrode assemblies, the selected electrode assembly is unfolded, and one surface of the separator S of one among the unfolded positive electrode, negative electrode and two separators is attached to the core of the winding machine 11 to be winded, thereby preparing the sample of the separator S.

Therefore, the winding machine 11 may be configured to unfold the selected electrode assembly, attach one surface of the separator S of one of the unfolded positive electrode, negative electrode, and two separators to the core of the winding machine 11, and then wind it to manufacture the sample of the separator S. For sake of brevity, a more detailed description of the winding machine 11 will be omitted.

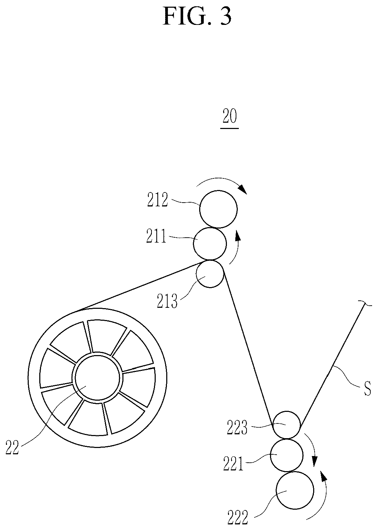

FIG. 3 is a schematic diagram of a foreign material removal unit 20 in FIG. 2. Referring to FIG. 1 to FIG. 3, in the second step ST2, a foreign material on the surface of the separator S is removed, e.g. by using the foreign material removal unit 20. The foreign material removal unit 20 is configured to remove the foreign material of the surface of the separator S. The foreign material removal unit 20 may include a first adhesion roller 211 and a first removal roller 212, and a second adhesion roller 221 and a second removal roller 222.

The second step ST2 may include a second/first step in which because the first adhesion roller 211 and the first removal roller 212 are sequentially in contact with the first surface of the separator S and rotated thereon, the foreign material on the first surface is removed by using the difference in viscosity between the first adhesion roller 211 and the first removal roller 212, and a second/second step in which because the second adhesion roller 221 and the second removal roller 222 are sequentially in contact with the second surface of the separator S and rotated thereon, the foreign material on the second surface is removed by using the viscosity difference between the second adhesion roller 221 and the second removal roller 222.

In the second/first step and the second/second step, despite the difference in the viscosity between the first adhesion roller 211 and the first removal roller 212 and the difference in the viscosity between the second adhesion roller 221 and the second removal roller 222, the black spots formed by a metal oxide penetrating the inside of the separator S may be maintained.

The first adhesion roller 211 and the first removal roller 212 are in contact and rotated sequentially with the first surface (the upper surface in FIG. 2 and FIG. 3) of the separator S, and the first removal roller 212 is in contact with the first adhesion roller 211 and rotated and has the stronger adhesion force than that of the first adhesion roller 211. That is, by using the viscosity difference, the foreign material of the first surface of the separator S supported by the first reaction force roller 213 is removed.

The second adhesion roller 221 and the second removal roller 222 are in contact with the second surface (the lower surface in FIG. 2 and FIG. 3), i.e. the first surface arranged opposite to the first second surface, of the separator S and rotated, and the second removal roller 222 is in contact with the second adhesion roller 221 and rotated and has the stronger adhesion force of that of the second adhesion roller 221. That is, by using the viscosity difference, the foreign material on the second surface of the separator S supported by the second reaction force roller 223 is removed.

The adhesion force may be divided into 5 steps: weak, medium and weak, medium, medium and strong, and strong. The first and second adhesion rollers 211 and 221 in contact with the first surface and the second surface to remove the foreign materials on the surface of the separator S may proceed as rollers with a medium adhesion. The first and second removal rollers 212 and 222, which transfer and remove the foreign material transferred to the first and second adhesion rollers 211 and 221, may proceed as rollers with a strong adhesion

In order to transfer the foreign material between the first and second adhesion rollers 211 and 221 and the first and second removal roller 212 and 222, there must be a difference of more than 2 steps out of 5 steps in the viscosity. Even in this case, the black spots formed by the metal oxide penetrating the inside of the separator S are maintained with an original state thereof.

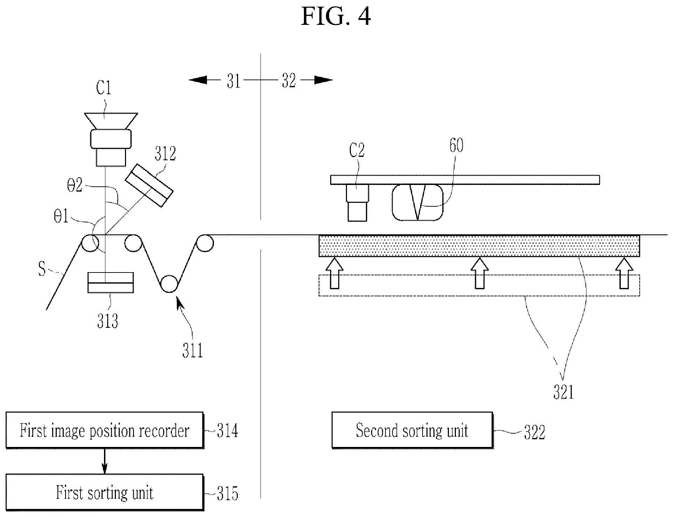

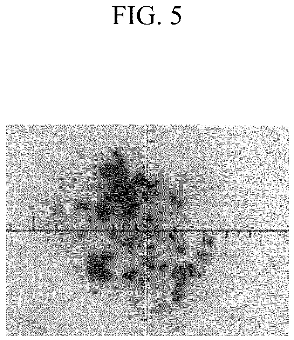

FIG. 4 is a schematic diagram of a first image measuring unit 31 and a second image measuring unit 32 in FIG. 2. Referring to FIG. 1, FIG. 2, and FIG. 4, in the third step ST3, a first image (referring to FIG. 5) for the part where the black spots are estimated in the separator S is obtained by using a first camera C1, and the position of the first image is recorded. In the third step ST3, a line camera may be used as the first camera C1 to measure the black and white first image from the separator S on the roll-to-roll driving unit 311.

The first image measuring unit 31 is configured to obtain the first image for the part where the black spots are estimated in the separator S via the foreign material removal unit 20 by the first camera C1 and record the position of the first image. The first image measuring unit 31 may include a roll-to-roll driving unit 311 that stops when measuring the first image with the first camera C1 and measures the first image from the separator S.

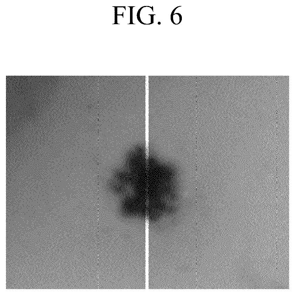

In the fourth step ST4, the part where the black spots are estimated is first selected by using the first image, and the second image (referring to FIG. 6) for the black spots and the foreign materials other than the black spots in the separator S by using the second camera C2 for the recorded position is obtained. In the fourth step ST4, an area camera may be used as the second camera C2, and the second image may be measured from the separator S on the stage driving unit 321 following the roll-to-roll driving unit 311.

The second image measuring unit 32 is configured to first select the part where the black spots are estimated by using the first image of the separator S passed through the first image measuring unit 31, and to acquire the second image for the black spots and the foreign material other than the black spots for the recorded position by the second camera C2. The second image measuring unit 32 may follow the roll-to-roll driving unit 311 and may include a stage driving unit 321 that measures the second image from the separator S with the second camera C2.

Again, referring to FIG. 2 and FIG. 4, the first image measuring unit 31 may include a reflected light (unit) 312 and a transmission light (unit) 313. The reflected light (unit) 312 may be composed and disposed to reflect the light from the separator S by lighting one surface of the separator S from the first camera C1 side.

The transmission light (unit) 313 is constructed and disposed to light the other surface of the separator S to transmit the light through the separator S. The reflected light (unit) 312 may be disposed to the first camera C1 with a first angle θ1, and the transmission light (unit) 313 may be disposed to the first camera C1 with a second angle θ2. As an example, the first angle θ1 may be 180 degrees and the second angle θ2 may be in a range between zero and 90 degrees, preferably between 15 and 75 degrees, particularly preferred between 30 and 60 degrees, most preferred 45 degrees.

The first image measuring unit 31 may further include a first image position recorder 314. The first image position recorder 314 marks a standard marking code on the separator S with an equal interval, recognizes the coordinates during the movement of the separator S, and records the position of the first image.

In addition, the first image position recorder 314 may calculate the distance according to the movement time of the separator S to set the Y coordinate, and may set the X coordinate in the width of the separator S in the measurement area of the first camera C1, thereby recording the position of the first image.

The first image measuring unit 31 may further include a first sorting unit 315 that first sorts the black spots and the foreign materials other than the black spots by using a data obtained from the first image. The second image measuring unit 32 may further include a second sorting unit 322 that secondary sorts the black spots and the foreign materials other than black spots by deep learning on the first image and the second image.

Referring to FIG. 1, FIG. 2, and FIG. 4, in the third step ST3, the first camera C1 may be fixed and the first image may be measured from the separator S in the stopped state of the roll-to-roll driving unit 311, and in the fourth step ST4, the second image may be measured from the moving separator S while moving the second camera C2 along with the stage driving unit 321, e.g. the raised stage driving unit 321. In the fourth step ST4, the first image obtained from all data obtained from the transmission mode and the reflection mode of the first camera C1 may be compared.

Preferably, in the third step ST3, a standard marking code is marked on the separator S with an equal interval to recognize a coordinate during the movement of the separator S, and the position of the first image is recorded in the first image position recorder 314.

Also, in the third step ST3, the Y coordinate may be set by calculating the distance according to the movement time of the separator S, the X coordinate may be set in the width of the separator S within the measurement area of the first camera C1 to record the position of the first image to the first image position recorder 314.

In the fifth step ST5, the deep learning is performed on the first image and the second image with a deep learning software to secondary select the black spots and display the position of the black spots. The black spots sorting unit 40 is configured to perform the deep learning on the first image and the second image with the deep learning software, secondary select the black spots, and display the position.

In the fifth step ST5, the second sorting unit 322 may secondary select the black spots and the foreign materials other than the black spots through the deep learning on the first image and the second image. In the deep learning, the color image of 2.5µm resolution obtained by the second camera C2 may be learned and selected by black spots BS and other foreign materials FM.

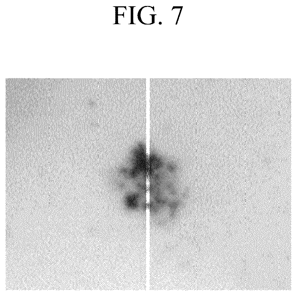

FIG. 5 is a view showing an optical image of actual black spots in a separator. FIG. 6 is a view showing a first image obtained by acquiring all data obtained in a transmission mode for a separator. FIG. 7 is a view showing a first image obtained by acquiring all data obtained from a reflection mode for a separator.

Referring to FIG. 5 to FIG. 7, the data obtained from the transmission mode and the reflection mode have differences from the actual black spots, and the images of the transmission mode and the reflection mode obtained from the third step ST3 may all be used and compared as the first image.

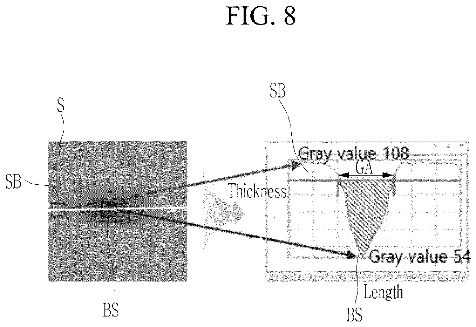

FIG. 8 is a view showing a plane image and a cross-section image of a separator showing a method of classifying black spots and foreign materials into gray values as a first image in a separator. Referring to FIG. 8, in the fourth step ST4, basically, using a gray value (a gray level) of a pixel in the first image, the part with the difference between a base and a peak (peak) is detected as a part where the black spots are estimated. The black spots and the foreign materials are distinguished by using other data.

FIG. 8 is the image of measuring the black spots of 100 µm size of the actual separator S. The pixel 1 of the black spots central portion is 10 µm. The gray value of the base SB of the separator S is 108, and the gray value of the central portion of the black spots BS is 54. The portion with the black spots BS is a good area GA as a detection area.

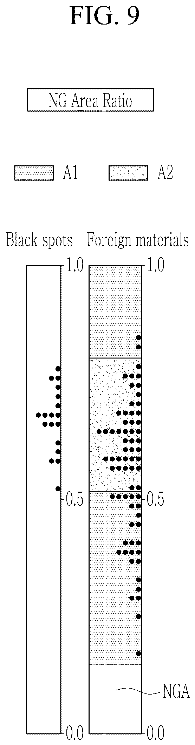

In the fourth step ST4, a no good area NGA that differ from the black spots for each data among the data may be excluded as an OR condition. At this time, the non-excluded good area GA may include a first area A1 capable of distinguishing the black spots BS and the foreign materials FM other than the black spots, and a second area A2 that is the same as the black spots (referring to FIG. 9 to FIG. 12).

In each data, the gray values of the no good area NGA and the good area GA, and the first area A1 and the second area A2 of the good area GA are shown in Table 1 and FIG. 9 to FIG. 12

**(Table 1)**

| Characteristics | Black spots | Foreign material |
|---|---|---|
| No good area ratio (FIG. 9) | 0.51-0.77 | 0.16-0.83 |
| Peak change (FIG. 10) | 15-89 | 4-103 |
| Peak average (FIG. 11) | 7-51 | 2.65-76 |
| Gray value change (FIG. 12) | -13- -70 | -4.5- -92 |
| Average gray value (FIG. 13) | 41-95 | 35-107 |
| Minimum gray value (FIG. 14) | 8-87 | 7-104 |
| Aspect ratio | <1.5 | <10 |

FIG. 9 is a view showing an image that primarily excludes foreign materials other than black spots by utilizing an inappropriate area ratio among a data obtained from a first image acquired from a first camera. Referring to FIG. 9, in the fourth step ST4, the no good area NGA may be excluded by using a ratio of the no good area in the data, thereby reducing an over-detection rate in which the foreign materials other than the black spots are excessively detected as the first image. That is, the no good area NGA except the first area A1 and the second area A2 may be excluded, and an exceeding area 0.83 may be excluded from the first area A1.

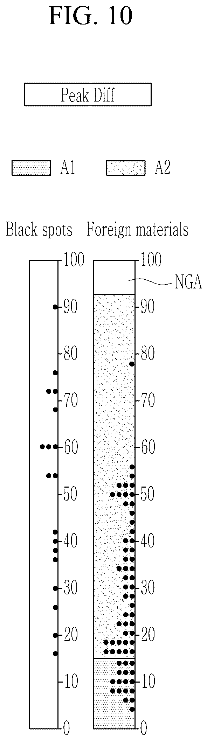

FIG. 10 is a view showing an image that primarily excludes foreign materials other than black spots by utilizing a peak change among a data obtained from a first image acquired from a first camera. Referring to FIG. 10, in the fourth step ST4, an over-detection rate in which the foreign materials other than the black spots are excessively detected as the first image may be reduced by excluding the no good area NGA by using a peak difference (peak diff) of the gray value (gray level) among the data. That is, the no good area NGA except the first area A1 and the second area A2 is excluded.

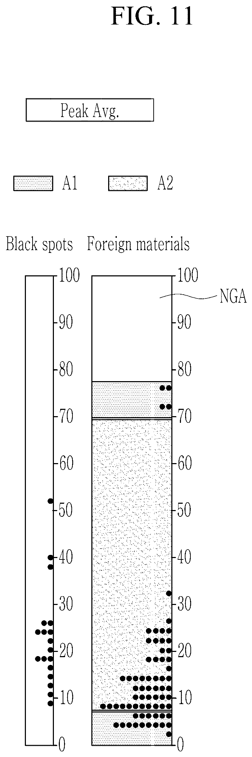

FIG. 11 is a view showing an image that primarily excludes foreign materials other than black spots by using a peak average among data obtained from the first image obtained from the first camera. Referring to FIG. 11, in the fourth step ST4, an over-detection rate in which the foreign materials other than the black spots are excessively detected as the first image may be reduced by excluding the no good area NGA by using a peak average (peak avg) of the gray value (gray level) among the data. That is, the no good area NGA except the first area A1 and the second area A2 is excluded.

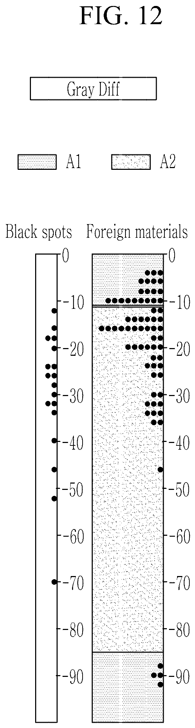

FIG. 12 is a view showing an image that primarily excludes foreign materials other than black spots by utilizing a gray value change among a data obtained from a first image acquired from a first camera. Referring to FIG. 12, in the fourth step ST4, an over-detection rate in which the foreign materials other than the black spots are excessively detected as the first image may be reduced by excluding the no good area NGA by using a difference (diff) of the gray value (gray level) among the data. That is, the no good area NGA except for the first area A1 and the second area A2 may be excluded, and an area exceeding a first gray value threshold, e.g. -4.5, and an area less than a second gray value threshold, e.g. -92, may be excluded from the first area A1.

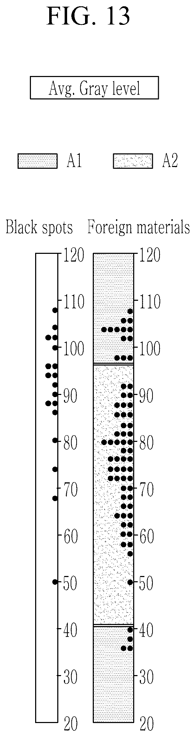

FIG. 13 is a view showing an image that primarily excludes foreign materials other than black spots by utilizing an average gray value level among a data obtained from a first image acquired from a first camera. Referring to FIG. 13, in the fourth step ST4, an over-detection rate in which the foreign materials other than the black spots are excessively detected as the first image may be reduced by excluding the no good area NGA by using a difference (avg gray diff) of the average gray value (gray level) among the data. That is, the no good area NGA except for the first area A1 and the second area A2 may be excluded, and an area less than a first average gray value threshold, e.g. 35, and an area exceeding a second average gray value threshold, e.g. 107, may be excluded from the first area A1.

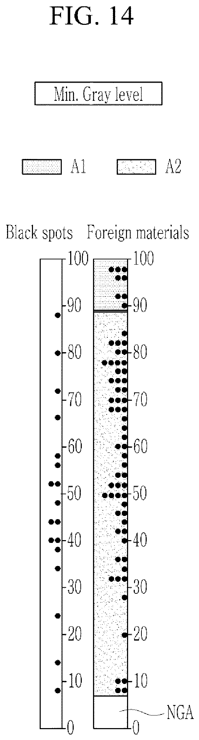

FIG. 14 is a view showing an image that primarily excludes foreign materials other than black spots by utilizing a minimum gray value level among a data obtained from a first image acquired from a first camera. Referring to FIG. 14, an over-detection rate in which the foreign materials other than the black spots are excessively detected as the first image may be reduced by excluding the no good area NGA by using a difference (min gray diff) of the minimum gray value (gray level) among the data. That is, the no good area NGA except the first area A1 and the second area A2 is excluded.

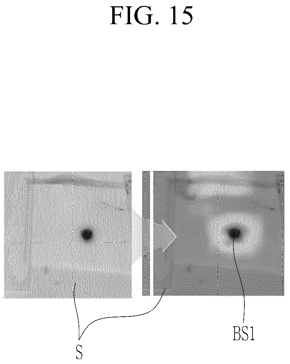

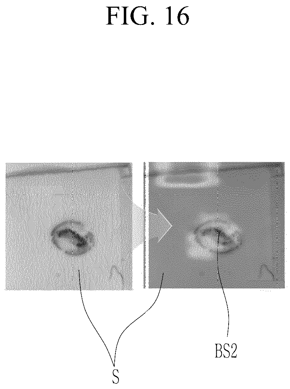

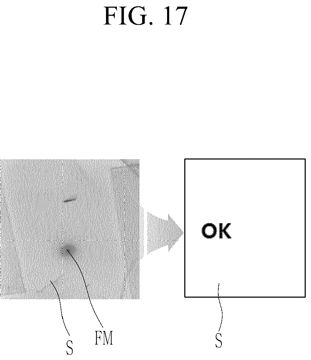

FIG. 15 and FIG. 16 are views showing an image in which black spots are detected as a no good NG by deep learning a first image and a second image and secondary selecting black spots. FIG. 17 is a view showing an image that detects foreign materials other than black spots as a good OK by secondary selecting materials other than black spots by deep learning a first image and a second image.

Referring to FIG. 15 to FIG. 17, in the fifth step ST5, the black spots may be secondary selected to detect the black spots as a no good NG by deep learning the first image and the second image, a material other than the black spots may be secondary selected, and the foreign material FM other than black spots may be detected as a good OK.

Again, referring to FIG. 1 and FIG. 2, the method for finding the black spots of the separator according to an embodiment may further include a sixth step ST6 of automatically analyzing components of the black spots by using an equipment. The black spots are characterized twice in the fourth step ST4 and the fifth step ST5, and in the sixth step ST6, the components of the black spots may be analyzed with X-rays by using an X-ray fluorescence analysis (XRF) equipment.

The system for finding the black spots of the separator of an embodiment may further include a component analysis unit 60 that analyzes the components of the black spots selected in the black spots sorting unit 40. The component analysis unit 60 may be configured to analyze the components of the black spots with X-rays by using an X-ray Fluorescence Analysis (XRF) facility. The X-ray fluorescence analysis facility may be mounted together on the moving axis of the second camera C2 and moves to a specific coordinate to analyze the components of the black spots by using X-rays.

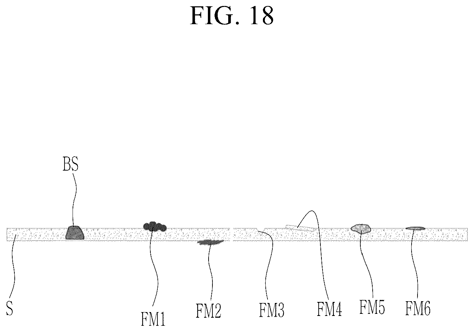

FIG. 18 is a cross-sectional view showing black spots detected in a separator and foreign materials other than black spots excluded from a first selection. FIG. 18 is the result found by the method and system of the embodiment in the sample separator S, which was not found with the naked eye. The black spots BS found with the method and system for finding the black spots of the separator of the embodiment are formed of metal components.

As an example, the metal component may include one of copper, zinc, and stainless steel. The foreign material FM other than the black spots may include one of a positive active material FM1, a negative active material FM2, a stamping FM3, a folding FM4, a separator foreign material FM5, and a side reactant FM6. The Foreign material FM other than the black spots is removed in the foreign material removal unit 20, so an over-detection of the first image is prevented.

While this invention has been described in connection with what is presently considered to be practical example embodiments, it is to be understood that the invention is not limited to the disclosed embodiments. On the contrary, it is intended to cover various modifications and equivalent arrangements included within the scope of the appended claims.

**<Description of symbols>**

| | | | |
|---|---|---|---|
| 11: | winding machine | 12: | rewinder |
| 20: | foreign material removal unit | 31: | first image measuring unit |
| 32: | secondary image sorting unit | 40: | black spots sorting unit |
| 60: | component analysis unit | 211: | first adhesion roller |
| 212: | first removal roller | 221: | second adhesion roller |
| 222: | second removal roller | 213: | first reaction force roller |
| 223: | second reaction force roller | 311: | roll-to-roll driving unit |
| 312: | reflected light | 313: | transmission light |
| 314: | first image position recorder | 315: | first sorting unit |
| 321: | stage driving unit | 322: | second sorting unit |
| A1: | first area | A2: | second area |
| BS: | black spots | BS1, BS2: | black spots |
| C1: | first camera | C2: | second camera |
| FM: | foreign material | FM1: | positive active material |
| FM2: | negative active material | FM3: | stamping |
| FM4: | folding | FM5: | separator foreign material |
| FM6: | side reactant | GA: | good area |
| NGA: | no good area | S: | separator |
| SB: | separator base | Θ1: | first angle |
| Θ2: | second angle | | |

## Claims

1. A method of finding black spots in a separator comprising:
taking out (ST1) a separator from a rechargeable battery cell;
removing (ST2) a foreign material of the separator surface;
obtaining (ST3) a first image for a portion where black spots are estimated in the separator by using a first camera (C1) and recording a position of the first image;
first selecting (ST4) the part where black spots are estimated by using the first image, and acquiring a second image for black spots and a foreign material other than black spots in the separator by using a second camera (C2) for the recorded position; and
secondary selecting (ST5) black spots by deep learning the first image and the second image with a deep learning software and then displaying the position of the black spots.

2. The method of finding black spots in the separator of claim 1, wherein:
in the taking out (ST1),
a prismatic case of the rechargeable battery cell is disassembled to take out a plurality of electrode assemblies and the amount of a voltage drop is checked to select one electrode assembly out of the plurality of electrode assemblies,
the selected electrode assembly is unfolded, and one surface of one separator among the unfolded positive electrode, negative electrode, and two separators is attached to a core of a winding machine (11) and then wound to prepare a sample of the separator.

3. The method of finding black spots in the separator of claim 1 or 2, wherein:
in the removing of the foreign material (ST2),
because a first adhesion roller (211) and a first removal roller (212) are sequentially contacted with and rotated on a first surface of the separator, the foreign material on the first surface is removed using the viscosity difference between the first adhesion roller (211) and the first removal roller (212), and
because a second adhesion roller (221) and a second removal roller (222) are sequentially contacted with and rotated on a second surface of the separator, the foreign material on the second surface is removed using the viscosity difference between the second adhesion roller (221) and the second removal roller (222).

4. The method of finding black spots in the separator of any one of the preceding claims, wherein:
in the obtaining of the first image (ST3),
the first image is measured from the separator on a roll-to-roll drive unit (331) by using a line camera as the first camera (C1).

5. The method of finding black spots in the separator of claim 4, wherein:
in the acquiring of the second image (ST4),
an area camera is used as the second camera (C2) and the second image is measured from the separator on a stage driving unit (321) following the roll-to-roll drive unit (331).

6. The method of finding black spots in the separator of claim 5, wherein:
in the obtaining of the first image (ST3), the first camera (C1) is fixed to measure the first image from the separator in a stopped state of the roll-to-roll drive unit (331), and
in the acquiring of the second image (ST4), the second image is measured from the moving separator while moving the second camera (C2) along with the stage driving unit (321).

7. The method of finding black spots in the separator of claim 6, wherein:
in the first selecting (ST4),
black spots and foreign materials other than black spots are first selected by using a data that can be obtained from the first image, and
in the second selecting of the black spots (ST5),
black spots and foreign materials other than the black spots are secondary selected by deep learning the first image and the secondary image.

8. The method of finding black spots in the separator of claim 7, wherein:
in the first selecting (ST4),
the first image including all data obtained from a transmission mode and a reflection mode of the first camera (C1) is compared.

9. The method of finding black spots in the separator of claim 7 or 8, wherein:
in the first selecting (ST4),
the part with a difference between a base and a peak is detected as the part where black spots are estimated by using a gray level of pixels from the first image.

10. The method of finding black spots in the separator of any one of the claims 7 to 9, wherein:
in the first selecting (ST4),
a no good area that differs from the black spots is first excluded as an OR condition for each data among the data,
at this time, a good area that is not excluded includes
a first area that may distinguish black spots and foreign materials other than black spots, and a second area that is the same as black spots.

11. The method of finding black spots in the separator of claim 10, wherein:
in the first selecting (ST4) and the acquiring of the second image,
a no good area is excluded using a peak difference of a gray level among the data.

12. The method of finding black spots in the separator of claim 10 or 11, wherein:
in the first selecting (ST4) and the acquiring of the second image,
a no good area is. excluded among the data by using a peak average of a gray level.

13. The method of finding black spots in the separator of any one of the claims 10 to 12, wherein:
in the first selecting (ST4) and the acquiring of the second image,
a no good area is excluded among the data by using a difference of a gray level.

14. The method of finding black spots in the separator of claim 13, wherein:
in the first selecting (ST4) and the acquiring of the second image,
a no good area is excluded among the data by using a difference of an average gray level and/or by using a difference of a minimum gray level.

15. The method of finding black spots in the separator of any one of the claims 7 to 14, further comprising:
automatically analyzing (ST6) the components of the black spots by using an equipment,
wherein the black spots are specified twice in the first selection (ST4) and the second selection (ST5), and
wherein in the automatically analyzing (ST6),
the components of the black spots are analyzed with X-rays using X-ray fluorescence analysis, XRF, equipment.

## Patentansprüche

1. Verfahren zum Auffinden schwarzer Flecken in einem Separator, umfassend:
Herausnehmen (ST1) eines Separators aus einer wiederaufladbaren Batteriezelle;
Entfernen (ST2) eines Fremdkörpers von der Oberfläche des Separators;
Erhalten (ST3) eines ersten Bildes für einen Abschnitt, in dem schwarze Flecken im Separator geschätzt werden, unter Verwendung einer ersten Kamera (C1) und Aufzeichnen einer Position des ersten Bildes;
erstes Auswählen (ST4) des Teils, in dem schwarze Flecken unter Verwendung des ersten Bildes geschätzt werden, und Erfassen eines zweiten Bildes für schwarze Flecken und einen anderen Fremdkörper als schwarze Flecken im Separator unter Verwendung einer zweiten Kamera (C2) für die aufgezeichnete Position; und
sekundäres Auswählen (ST5) schwarzer Flecken durch Deep Learning des ersten Bildes und des zweiten Bildes mit einer Deep-Learning-Software und anschließendes Anzeigen der Position der schwarzen Flecken.

2. Verfahren zum Auffinden schwarzer Flecken in dem Separator nach Anspruch 1, wobei:
beim Herausnehmen (ST1)
ein prismatisches Gehäuse der wiederaufladbaren Batteriezelle zerlegt, um mehrere Elektrodenbaugruppen herauszunehmen, und die Höhe eines Spannungsabfalls überprüft wird, um eine Elektrodenbaugruppe aus den mehreren Elektrodenbaugruppen auszuwählen,
die ausgewählte Elektrodenbaugruppe entfaltet wird und eine Oberfläche eines Separators unter der entfalteten positiven Elektrode, der negativen Elektrode und zwei Separatoren an einem Kern einer Wickelmaschine (11) angebracht und dann gewickelt wird, um eine Probe des Separators vorzubereiten.

3. Verfahren zum Auffinden schwarzer Flecken in dem Separator nach Anspruch 1 oder 2, wobei:
beim Entfernen des Fremdkörpers (ST2)
eine erste Haftwalze (211) und eine erste Entfernungswalze (212) nacheinander mit einer ersten Oberfläche des Separators in Kontakt gebracht und auf dieser gedreht werden, wodurch der Fremdkörper auf der ersten Oberfläche unter Ausnutzung des Viskositätsunterschieds zwischen der ersten Haftwalze (211) und der ersten Entfernungswalze (212) entfernt wird, und
eine zweite Haftwalze (221) und eine zweite Entfernungswalze (222) nacheinander mit einer zweiten Oberfläche des Separators in Kontakt gebracht und auf dieser gedreht werden, wodurch der Fremdkörper auf der zweiten Oberfläche unter Ausnutzung des Viskositätsunterschieds zwischen der zweiten Haftwalze (221) und der zweiten Entfernungswalze (222) entfernt wird.

4. Verfahren zum Auffinden schwarzer Flecken in dem Separator nach einem der vorstehenden Ansprüche, wobei:
beim Erhalten des ersten Bildes (ST3)
das erste Bild von dem Separator auf einer Roll-zu-Roll-Antriebseinheit (331) unter Verwendung einer Zeilenkamera als erste Kamera (C1) gemessen wird.

5. Verfahren zum Auffinden schwarzer Flecken in dem Separator nach Anspruch 4, wobei:
beim Erfassen des zweiten Bildes (ST4)
eine Flächenkamera als zweite Kamera (C2) verwendet und das zweite Bild von dem Separator auf einer Stufenantriebseinheit (321) gemessen wird, die der Roll-zu-Roll-Antriebseinheit (331) folgt.

6. Verfahren zum Auffinden schwarzer Flecken in dem Separator nach Anspruch 5, wobei:
beim Erhalten des ersten Bildes (ST3) die erste Kamera (C1) fixiert ist, um das erste Bild vom Separator in einem angehaltenen Zustand der Roll-zu-Roll-Antriebseinheit (331) zu messen, und
beim Erfassen des zweiten Bildes (ST4) das zweite Bild vom sich bewegenden Separator gemessen wird, während die zweite Kamera (C2) zusammen mit der Stufenantriebseinheit (321) bewegt wird.

7. Verfahren zum Auffinden schwarzer Flecken in dem Separator nach Anspruch 6, wobei:
beim ersten Auswählen (ST4)
zuerst schwarze Flecken und andere Fremdkörper als schwarze Flecken unter Verwendung von Daten ausgewählt werden, die aus dem ersten Bild gewonnen werden können, und
beim zweiten Auswählen der schwarzen Flecken (ST5)
schwarze Flecken und andere Fremdkörper als schwarze Flecken durch Deep Learning des ersten Bildes und des sekundären Bildes sekundär ausgewählt werden.

8. Verfahren zum Auffinden schwarzer Flecken in dem Separator nach Anspruch 7, wobei:
beim ersten Auswählen (ST4)
das erste Bild, das alle Daten enthält, die aus einem Durchlichtmodus und einem Reflexionsmodus der ersten Kamera (C1) erhalten werden, verglichen wird.

9. Verfahren zum Auffinden schwarzer Flecken in dem Separator nach Anspruch 7 oder 8, wobei:
beim ersten Auswählen (ST4)
der Teil mit einer Differenz zwischen einer Basis und einem Peak als der Teil erkannt wird, in dem schwarze Flecken unter Verwendung einer Graustufe von Pixeln aus dem ersten Bild geschätzt werden.

10. Verfahren zum Auffinden schwarzer Flecken in dem Separator nach einem der Ansprüche 7 bis 9, wobei:
beim ersten Auswählen (ST4)
zunächst ein nutzloser Bereich, der sich von den schwarzen Flecken unterscheidet, als ODER-Bedingung für jede Daten unter den Daten ausgeschlossen wird,
wobei zu diesem Zeitpunkt ein nutzbarer Bereich, der nicht ausgeschlossen wird, Folgendes umfasst:
einen ersten Bereich, der schwarze Flecken und andere Fremdkörper als schwarze Flecken unterscheiden kann, und einen zweiten Bereich, der mit schwarzen Flecken identisch ist.

11. Verfahren zum Auffinden schwarzer Flecken in dem Separator nach Anspruch 10, wobei:
bei dem ersten Auswählen (ST4) und dem Erfassen des zweiten Bildes
ein nutzloser Bereich unter Verwendung einer Spitzendifferenz einer Graustufe unter den Daten ausgeschlossen wird.

12. Verfahren zum Auffinden schwarzer Flecken in dem Separator nach Anspruch 10 oder 11, wobei:
bei dem ersten Auswählen (ST4) und dem Erfassen des zweiten Bildes
ein nutzloser Bereich unter den Daten unter Verwendung eines Spitzenmittelwerts einer Graustufe ausgeschlossen wird.

13. Verfahren zum Auffinden schwarzer Flecken in dem Separator nach einem der Ansprüche 10 bis 12, wobei:
bei dem ersten Auswählen (ST4) und dem Erfassen des zweiten Bildes
ein nutzloser Bereich unter den Daten unter Verwendung einer Differenz einer Graustufe ausgeschlossen wird.

14. Verfahren zum Auffinden schwarzer Flecken in dem Separator nach Anspruch 13, wobei:
bei dem ersten Auswählen (ST4) und dem Erfassen des zweiten Bildes
ein nutzloser Bereich unter den Daten unter Verwendung einer Differenz einer durchschnittlichen Graustufe und/oder unter Verwendung einer Differenz einer minimalen Graustufe ausgeschlossen wird.

15. Verfahren zum Auffinden schwarzer Flecken in dem Separator nach einem der Ansprüche 7 bis 14, umfassend ferner:
automatisches Analysieren (ST6) der Bestandteile der schwarzen Flecken unter Verwendung einer Vorrichtung,
wobei die schwarzen Flecken zweimal bei dem ersten Auswählen (ST4) und dem zweiten Auswählen (ST5) spezifiziert werden, und
wobei beim automatischen Analysieren (ST6)
die Bestandteile der schwarzen Flecken mit Röntgenstrahlen unter Verwendung einer Röntgenfluoreszenzanalysevorrichtung (XRF-Vorrichtung) analysiert werden.

## Revendications

1. Procédé de recherche de taches noires dans un séparateur comportant :
le retrait (ST1) d'un séparateur d'un élément de batterie rechargeable ;
l'enlèvement (ST2) d'une matière étrangère de la surface de séparateur ;
l'obtention (ST3) d'une première image pour une portion où des taches noires sont recherchées dans le séparateur en utilisant une première caméra (C1) et l'enregistrement d'une position de la première image ;
la première sélection (ST4) de la partie où les taches noires sont recherchées en utilisant la première image, et l'acquisition d'une seconde image pour des taches noires et une matière étrangère autre que des taches noires dans le séparateur en utilisant une seconde caméra (C2) pour la position enregistrée ; et
la sélection secondaire (ST5) de taches noires par apprentissage profond de la première image et de la seconde image avec un logiciel d'apprentissage profond, puis l'affichage de la position des taches noires.

2. Procédé de recherche de taches noires dans le séparateur selon la revendication 1, dans lequel :
lors du retrait (ST1),
un boîtier prismatique de l'élément de batterie rechargeable est démonté pour retirer une pluralité d'ensembles électrodes et la valeur d'une chute de tension est vérifiée pour sélectionner un ensemble électrode parmi la pluralité d'ensembles électrodes,
l'ensemble électrode sélectionné est déplié, et une surface d'un séparateur parmi l'électrode positive dépliée, l'électrode négative dépliée et deux séparateurs dépliés est fixée à un noyau d'une machine d'enroulement (11), puis enroulée pour préparer un échantillon du séparateur.

3. Procédé de recherche de taches noires dans le séparateur selon la revendication 1 ou 2, dans lequel :
lors de l'enlèvement de la matière étrangère (ST2),
du fait de l'entrée en contact et de la mise en rotation séquentielles d'un premier rouleau d'adhérence (211) et d'un premier rouleau d'enlèvement (212) sur une première surface du séparateur, la matière étrangère sur la première surface est enlevée à l'aide de la différence de viscosité entre le premier rouleau d'adhérence (211) et le premier rouleau d'enlèvement (212), et
du fait de l'entrée en contact et de la mise en rotation séquentielles d'un second rouleau d'adhérence (221) et d'un second rouleau d'enlèvement (222) sur une seconde surface du séparateur, la matière étrangère sur la seconde surface est enlevée à l'aide de la différence de viscosité entre le second rouleau d'adhérence (221) et le second rouleau d'enlèvement (222).

4. Procédé de recherche de taches noires dans le séparateur selon l'une quelconque des revendications précédentes, dans lequel :
lors de l'obtention de la première image (ST3),
la première image est mesurée à partir du séparateur sur une unité d'entraînement rouleau à rouleau (331) en utilisant une caméra à balayage linéaire comme première caméra (C1).

5. Procédé de recherche de taches noires dans le séparateur selon la revendication 4, dans lequel :
lors de l'acquisition de la seconde image (ST4),
une caméra de zone est utilisée comme seconde caméra (C2) et la seconde image est mesurée à partir du séparateur sur une unité d'entraînement de platine (321) suivant l'unité d'entraînement rouleau à rouleau (331).

6. Procédé de recherche de taches noires dans le séparateur selon la revendication 5, dans lequel :
lors de l'obtention de la première image (ST3), la première caméra (C1) est fixée pour mesurer la première image à partir du séparateur dans un état arrêté de l'unité d'entraînement rouleau à rouleau (331), et
lors de l'acquisition de la seconde image (ST4), la seconde image est mesurée à partir du séparateur mobile tout en déplaçant la seconde caméra (C2) avec l'unité d'entraînement de platine (321).

7. Procédé de recherche de taches noires dans le séparateur selon la revendication 6, dans lequel :
lors de la première sélection (ST4),
des taches noires et des matières étrangères autres que des taches noires sont sélectionnées dans un premier temps en utilisant des données qui peuvent être obtenues à partir de la première image, et
lors de la seconde sélection des taches noires (ST5),
des taches noires et des matières étrangères autres que les taches noires sont sélectionnées dans un second temps par apprentissage profond de la première image et de l'image secondaire.

8. Procédé de recherche de taches noires dans le séparateur selon la revendication 7, dans lequel :
lors de la première sélection (ST4),
la première image incluant toutes les données obtenues à partir d'un mode d'émission et d'un mode de réflexion de la première caméra (C1) est comparée.

9. Procédé de recherche de taches noires dans le séparateur selon la revendication 7 ou 8, dans lequel :
lors de la première sélection (ST4),
la partie présentant une différence entre une base et un pic est détectée comme étant la partie où les taches noires sont recherchées en utilisant un niveau de gris de pixels de la première image.

10. Procédé de recherche de taches noires dans le séparateur selon l'une quelconque des revendications 7 à 9, dans lequel :
lors de la première sélection (ST4),
une zone non exploitable qui est différente des taches noires est d'abord exclue en tant que condition OU pour chaque donnée parmi les données,
à ce stade, une zone exploitable qui n'est pas exclue inclut
une première zone qui peut permettre de différencier des taches noires et des matières étrangères autres que les taches noires, et une seconde zone qui est la même que les taches noires.

11. Procédé de recherche de taches noires dans le séparateur selon la revendication 10, dans lequel :
lors de la première sélection (ST4) et de l'acquisition de la seconde image,
une zone non exploitable est exclue des données en utilisant une différence de pic d'un niveau de gris.

12. Procédé de recherche de taches noires dans le séparateur selon la revendication 10 ou 11, dans lequel :
lors de la première sélection (ST4) et de l'acquisition de la seconde image,
une zone non exploitable est exclue des données en utilisant une moyenne de pic d'un niveau de gris.

13. Procédé de recherche de taches noires dans le séparateur selon l'une quelconque des revendications 10 à 12, dans lequel :
lors de la première sélection (ST4) et de l'acquisition de la seconde image,
une zone non exploitable est exclue des données en utilisant une différence de niveau de gris.

14. Procédé de recherche de taches noires dans le séparateur selon la revendication 13, dans lequel :
lors de la première sélection (ST4) et de l'acquisition de la seconde image,
une zone non exploitable est exclue des données en utilisant une différence d'un niveau de gris moyen et/ou en utilisant une différence d'un niveau de gris minimum.

15. Procédé de recherche de taches noires dans le séparateur selon l'une quelconque des revendications 7 à 14, comportant en outre :
l'analyse automatique (ST6) des composants des taches noires en utilisant un équipement,
dans lequel les taches noires sont spécifiées deux fois dans la première sélection (ST4) et la seconde sélection (ST5), et
dans lequel lors de l'analyse automatique (ST6),
les composants des taches noires sont analysés aux rayons X en utilisant un équipement d'analyse par fluorescence X, XRF.
